# EUROPÄISCHE PATENTSCHRIFT

(11) **EP 1 935 694 B1**
(45) Veröffentlichungstag und Bekanntmachung des Hinweises auf die Patenterteilung: **30.09.2009**
(21) Anmeldenummer: 07118682.9
(22) Anmeldetag: 17.10.2007
(51) Int. Cl.: B60J 10/08, B60J 10/00

(54) **Dichtungsprofil, insbesondere zum Abdichten einer Tür gegenüber der Karosserie eines Kraftfahrzeugs**
Sealing profile, in particular for sealing between a door and the bodywork of a motor vehicle
Profil d'étanchéité, en particulier destiné à étancher entre une porte et la carrosserie d'un véhicule automobile

(30) Priorität: 20.12.2006 DE 102006060390
(43) Veröffentlichungstag der Anmeldung: 25.06.2008
(73) Patentinhaber: METZELER Automotive Profiles GmbH, D-88131 Lindau (DE)
(72) Erfinder: Poppele, Christoph Metzeler Automotive Profile Systems GmbH, 88131, Lindau (DE)
(74) Vertreter: Schober, Christoph D.

(56) Entgegenhaltungen:
- EP-A- 1 500 542
- WO-A-00/73097
- WO-A-20/04050408
- GB-A- 2 393 751
- GB-A- 2 393 752
- US-A- 5 296 067
- US-A1- 2001 001 916
- US-A1- 2006 254 149

## Beschreibung

Die vorliegende Erfindung betrifft ein Dichtungsprofil, das insbesondere zum Abdichten einer Tür gegenüber der Karosserie eines Kraftfahrzeugs dient. Das Dichtungsprofil ist mit wenigstens einem Dichtungsabschnitt versehen, der wenigstens eine Dichtlippe aufweist und sich in einer Längsrichtung erstreckt. Das Dichtungsprofil ist ferner mit einem Befestigungsabschnitt versehen, der an einem Bauteil, zum Beispiel einem Flansch der Tür eines Kraftfahrzeugs, befestigbar ist. Der Dichtungsabschnitt ist aus einem elastisch verformbaren Werkstoff gefertigt und in der Längsrichtung gekrümmt. Die Dichtlippe weist ein freies Ende und einen dem freien Ende abgewandten Fuß auf.

Ein Dichtungsprofil, das einen mit zwei Dichtlippen versehenen Dichtungsabschnitt umfasst, wird in der DE 101 59 251 C1 beschrieben. Das Dichtungsprofil umfasst ferner einen Befestigungsabschnitt, der durch einen auf einen Flansch aufsteckbaren Kanal gebildet wird. Darüber hinaus umfasst das Dichtungsprofil eine Scheibeneinfassung für eine feststehende Fensterscheibe. Die Fensterscheibe hat eine gekrümmte Kontur, welche der einen zweiten Dichtungsabschnitt darstellenden Scheibeneinfassung folgt.

Weiterhin ist aus der US 5,976,438 ein Verfahren zum Herstellen eines Dichtungsprofils bekannt, das an einem im Querschnitt U-förmigen Rahmen der Tür eines Kraftfahrzeugs befestigt wird. Das Dichtungsprofil weist eine Bodenwand, zwei Seitenwände, zwei Dichtlippen und zwei Formlippen auf. Das Dichtungsprofil wird so auf den Rahmen aufgesteckt, dass die Schenkel des Rahmens in zwischen den Formlippen und den Seitenwänden gebildete Zwischenräume eingreifen. Um das Dichtungsprofil biegen und ohne nennenswerte Verformung in einer Gießform anordnen zu können, ist die Bodenwand mit drei Aussparungen versehen, die durch Zwischenstücke voneinander beabstandet sind. Die Zwischenstücke verleihen dem Dichtungsprofil eine ausreichende Steifigkeit, die eine nennenswerte Verformung des Querschnitts beim Einführen des Dichtungsprofils in die Gießform verhindert. In der Gießform werden die Aussparungen durch Spritzgießen gefüllt. Die auf diese Weise entstandenen Formteile stellen eine dauerhaft gebogene Form des Dichtungsprofils sicher. Darüber hinaus soll eine Verdickung im Übergangsbereich zwischen der Bodenwand und der Seitenwand, die während des Spritzgießens erzeugt wird, dazu beitragen, dass keine unerwünschte Deformation auftritt.

Überdies geht aus der EP 1 577 137 A1 ein Herstellungsverfahren für ein aus einem Elastomer oder einem Plastomer bestehendes Dichtungsprofil, das bar eines Verstärkungsträgers ist und zur Einfassung der Öffnung eines Kraftfahrzeugs dient, hervor. Das Verfahren sieht die Koextrusion von elastomeren oder plastomeren Zusatzabschnitten vor, die nach der Extrusion oder einer anschließenden Heizphase, wie zum Beispiel einer Vulkanisation, gekühlt werden. Die Zusatzabschnitte sind an der Außenfläche des Extrudats angeordnet und bestehen aus einem Werkstoff, der während des Abkühlens schrumpft, um auf diese Weise die gewünschte Form des Dichtungsprofils zu erzeugen. Die Zusatzabschnitte können eine lokale Veränderung der Dicke des Dichtungsprofils bewirken.

Ein extrudiertes Dichtungsprofil, das in Bereichen starker Krümmung eingesetzt wird, ist aus der GB 2 393 752 A bekannt. Das Dichtungsprofil umfasst einen Dichtungsabschnitt und einen Befestigungsabschnitt. Der Dichtungsabschnitt weist zwei Dichtlippen auf, die im eingebauten Zustand gegen das Dach eines Kraftfahrzeugs gedrückt werden. Der Befestigungsabschnitt umfasst eine kanalförmige Ausnehmung, die durch einen im Querschnitt U-förmigen Verstärkungsträger armiert ist. In die kanalförmige Ausnehmung ragen Haltelippen hinein. Die kanalförmige Ausnehmung dient zur Aufnahme eines von der Tür des Kraftfahrzeugs ausgebildeten Flansches. Der Dichtungsabschnitt weist ferner einen Bereich auf, der einen Kanal bildet, welcher zur Aufnahme einer feststehenden Fensterscheibe dient. In den Kanal erstrecken sich Dichtlippen, die aus einem weichem Material bestehen. An dem freien Ende des Bereichs ist zudem eine Lippe angebracht, die von der Tür des Kraftfahrzeugs ausgebildete Flansche umschließt. In dem Bereich ist darüber hinaus ein Befestigungskörper angeordnet, der zur Fixierung des Dichtungsprofils an dem Flansch der Tür des Kraftfahrzeugs dient. In Abschnitten starker Krümmung des Dichtungsprofils wird der Bereich entfernt und ein Formteil angespritzt.

Eine Dichtung für ein Kraftfahrzeug, die einen ringförmigen Dichtungsabschnitt und einen im Querschnitt U-förmigen Befestigungsabschnitt aufweist, wird in der US 5 296 067 A beschrieben. Der Dichtungsabschnitt und der Befestigungsabschnitt sind miteinander verklebt. Um die Dichtung in Bereichen starker Krümmung vor einer Faltenbildung zu schützen, wird ein runder Einsatz oder eine Verstärkung aus plastischem Material in den Dichtungsabschnitt eingebracht.

Eine Fensterglasführung, die einen Kanalbereich aufweist, der einen Bodenbereich und zwei Seitenwände umfasst, wird in der US 2001/0001916 A1 beschrieben. Die Fensterglasführung weist zwei Dichtlippen auf, die in den Kanalbereich hineinragen und eine Fensterscheibe umschließen. Eine der Dichtlippen weist an ihrer Unterseite ein elastisches Verstärkungselement auf, das dazu dient, ein Klappern der Fensterscheibe während des Öffnens oder Schließens zu verhindern, ohne dass die zum Öffnen oder Schließen der Fensterscheibe erforderliche Kraft wesentlich erhöht werden muss.

Als Nachteil der bekannten Dichtungsprofile hat sich herausgestellt, dass, wenn das Dichtungsprofil, vor allem der Dichtungsabschnitt, in der Längsrichtung stark gekrümmt ist, wie zum Beispiel ein häufig als Stilelement zu findender geknickter Übergang von der C-Säule eines Kraftfahrzeugs zum Wagenkörper, die Dichtlippe aufgrund der durch den gekrümmten Verlauf auftretenden Zugspannungen eine Verformung erfährt, die zum einen das optische Erscheinungsbild und zum anderen die Dichtwirkung beeinträchtigt.

Der Erfindung liegt die **Aufgabe** zugrunde, ein Dichtungsprofil der eingangs genannten Art dahingehend weiterzubilden, dass sich eine unerwünschte Verformung der Dichtlippe in Bereichen starker Krümmung vermeiden lässt.

Diese Aufgabe wird durch ein Dichtungsprofil mit den Merkmalen des Anspruchs 1 **gelöst**. Bevorzugte Ausgestaltungen eines solchen Dichtungsprofils werden in den Ansprüchen 2 bis 16 definiert.

Das erfindungsgemäße Dichtungsprofil zeichnet sich durch einen Zusatzabschnitt aus, der im Bereich einer vorgegebenen Krümmung des Dichtungsabschnitts an dem Fuß der Dichtlippe angeordnet ist. Die lokale Anordnung des Zusatzabschnittes in Bereichen starker Krümmung führt zu einer Stabilisierung der im Querschnitt häufig stiftförmigen Dichtlippe, die sicherstellt, dass die Dichtlippe keine übermäßige Verformung erfährt, sondern in der geforderten Lage bleibt. Ein in ästhetischer Hinsicht ansprechendes optisches Erscheinungsbild und eine zuverlässige Dichtwirkung sind somit sichergestellt. Darüber hinaus ist eine mit einem hohen Aufwand verbundene Nachbehandlung des Dichtungsprofils, wie sie im Stand der Technik üblich ist, indem durch eine übermäßige Verformung der Dichtlippe eingefallene Konturen des Dichtungsabschnitts entfernt, neu anvulkanisiert und gegebenenfalls nachbeflockt oder nachlackiert werden, entbehrlich.

In Hinsicht auf eine praxisgerechte Fertigung ist es zweckmäßig, den Dichtungsabschnitt und/oder den Befestigungsabschnitt aus einem elastomeren Werkstoff, vorzugsweise einem thermoplastischen Elastomer (TPE) oder Ethylen-Propylen-Dien-Kautschuk (EPDM), zu extrudieren. In diesem Zusammenhang hat es sich als vorteilhaft erwiesen, den Zusatzabschnitt durch variable Extrusion, wie sie zum Beispiel aus der EP 1 577 137 A1 bekannt ist, zu fertigen. Alternativ kann der Zusatzabschnitt entweder als separat gefertigtes und beispielsweise aus TPE bestehendes Formteil an den Fuß der Dichtlippe geklebt oder direkt an den Fuß der Dichtlippe angespritzt werden.

In einer bevorzugten Ausgestaltung des erfindungsgemäßen Dichtungsprofils weist der Dichtungsabschnitt eine Außenfläche auf, die sich in einer Querrichtung des Dichtungsabschnitts erstreckt. Die Dichtlippe ist in einem vorzugsweise spitzen Winkel zu der Außenfläche angeordnet. In diesem Fall hat es sich als vorteilhaft erwiesen, wenn der Zusatzabschnitt im Querschnitt annähernd keilförmig ist, um auf diese Weise die geneigte Dichtlippe abzustützen.

Zweckmäßigerweise ist die Dichtlippe mit einer reibungsvermindernden Beschichtung oder Beflockung versehen, die ein Anhaften der Dichtlippe an beispielsweise der Karosserie eines Kraftfahrzeugs verhindert. Die reibungsvermindernde Beschichtung oder Beflockung wird vorteilhafterweise ausschließlich auf der Seite Dichtlippe aufgebracht, die an beispielsweise der Karosserie des Kraftfahrzeugs anliegt. Um ein einfaches Beschichten oder Beflocken der Dichtlippe zu gewährleisten, befindet sich der Zusatzabschnitt in diesem Fall bevorzugt auf der der Beschichtung oder Beflockung abgewandten Seite der Dichtlippe.

In einer bevorzugten Ausgestaltung des erfindungsgemäßen Dichtungsprofils weist der Dichtungsabschnitt eine, von der Außenseite eines Kraftfahrzeugs betrachtet, äußere Dichtlippe und eine innere Dichtlippe auf, die sich in Längsrichtung des Dichtungsabschnitts erstrecken und in der Querrichtung des Dichtungsabschnitts in einem Abstand voneinander angeordnet sind. In diesem Zusammenhang hat es sich als vorteilhaft erwiesen, wenn der Zusatzabschnitt ausschließlich an dem Fuß der inneren Dichtlippe angeordnet ist. Es hat sich herausgestellt, dass es ausreichend ist, den Zusatzabschnitt an der inneren Dichtlippe anzuordnen, die in der Regel stärker geneigt ist als die äußere Dichtlippe und dadurch einer höheren Beanspruchung beim Biegen des Dichtungsabschnitts unterliegt.

Bevorzugt weist das Dichtungsprofil einen ersten Dichtungsabschnitt, der zum Abdichten einer Tür gegenüber der Karosserie eines Kraftfahrzeugs dient, und einen zweiten Dichtungsabschnitt, der zum Abdichten wenigstens einer Fensterscheibe dient, auf. Der erste Dichtungsabschnitt und der zweite Dichtungsabschnitt werden zweckmäßigerweise gemeinsam extrudiert. Der zweite Dichtungsabschnitt kann als Fensterführung ausgestaltet sein, um eine bewegbare Fensterscheibe abzudichten und zu führen. Alternativ kann der zweite Dichtungsabschnitt auch als Scheibeneinfassung für eine feststehende Fensterscheibe ausgestaltet sein.

Um eine praxisgerechte Befestigung des Dichtungsprofils sicherzustellen, ist bevorzugt der Befestigungsabschnitt mit einer kanalförmigen Aussparung versehen, die auf beispielsweise einen Flansch der Tür eines Kraftfahrzeugs aufsteckbar ist. Alternativ kann der Befestigungsabschnitt in an sich bekannter Weise an den Flansch geklebt werden, zum Beispiel mittels eines Klebebands.

Um einen hohen Kraftschluss sicherzustellen, ist der Befestigungsabschnitt vorteilhafterweise mit Haltelippen versehen, die in der Aussparung angeordnet sind. In diesem Zusammenhang hat es sich ferner als vorteilhaft erwiesen, den Befestigungsabschnitt durch einen Verstärkungsträger zu armieren. Der Verstärkungsträger ist zweckmäßigerweise im Querschnitt U-förmig ausgestaltet und aus einem metallischen Werkstoff gefertigt. Um eine ausreichende Verformungsfähigkeit des Verstärkungsträgers zu gewährleisten, kann dieser mit einer Vielzahl an beispielsweise gestanzten Öffnungen versehen sein.
Einzelheiten und weitere Vorteile des erfindungsgemäßen Dichtungsprofils ergeben sich aus der nachfolgenden Beschreibung eines bevorzugten Ausführungsbeispiels. In den das Ausführungsbeispiel lediglich schematisch darstellenden Zeichnungen veranschaulichen im Einzelnen:
- Fig. 1: eine Seitenansicht eines Kraftfahrzeugs;
- Fig. 2: einen Schnitt durch das erfindungsgemäße Dichtungsprofil gemäß der Linie ll-ll in Fig. 1 und
- Fig. 3: einen Schnitt durch das erfindungsgemäße Dichtungsprofil gemäß der Linie III-III in Fig. 1.

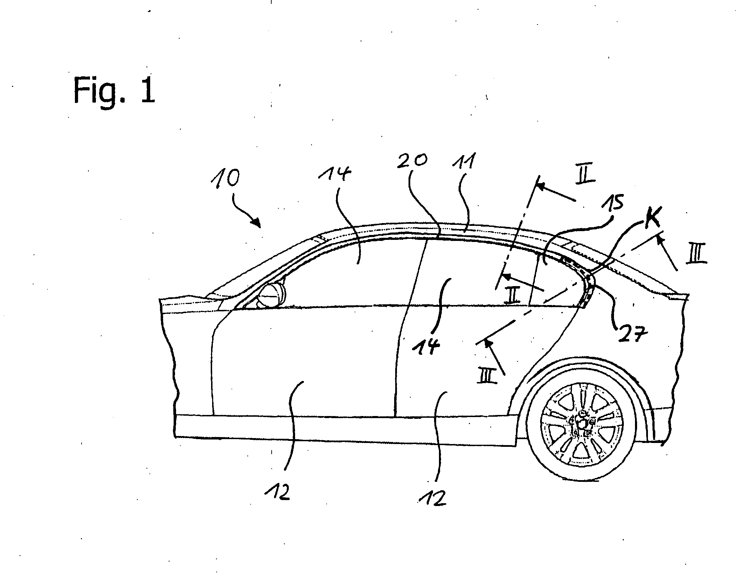

Das in Fig. 1 dargestellte Kraftfahrzeug 10 weist eine Karosserie 11 und Türen 12 auf. Die Türen 12 sind jeweils mit einer bewegbaren Fensterscheibe 14 versehen. Die in Fahrtrichtung des Kraftfahrzeugs 10 hintere Tür 12 ist zudem mit einer feststehenden, häufig als Dreiecksscheibe bezeichneten Fensterscheibe 15 versehen. Um die Türen 12 im geschlossenen Zustand gegenüber der Karosserie 11 abzudichten, findet ein Dichtungsprofil 20 Anwendung.

Das aus einem elastomeren Werkstoff, wie zum Beispiel TPE oder EPDM, extrudierte Dichtungsprofil weist einen ersten Dichtungsabschnitt 21 auf, der sich in Längsrichtung des Dichtungsprofils 20 erstreckt und eine, von der Außenseite des Kraftfahrzeugs 10 betrachtet, äußere Dichtlippe 22 und eine innere Dichtlippe 23 aufweist. Die Dichtlippen 22, 23 erstrecken sich in Längsrichtung des Dichtungsabschnitts 21 beziehungsweise des Dichtungsprofils 20 und sind in einer zu der Längsrichtung orthogonalen Querrichtung in einem Abstand a voneinander angeordnet. Die jeweils ein freies Ende 24 und einen dem freien Ende 24 abgewandten Fuß 25 aufweisenden Dichtlippen 22, 23 ragen aus einer Außenfläche 34 des Dichtungsabschnitts 21 heraus, die sich in der Querrichtung erstreckt. Die innere Dichtlippe 23 schließt mit der Außenfläche 34 einen spitzen Winkel α ein. Die äußere Dichtlippe 22 hingegen schließt mit der Außenfläche 34 einen Winkel β ein, der im unbelasteten Zustand des Dichtungsabschnitts 21 annähernd 90° beträgt. Sowohl die äußere Dichtlippe 22 als auch die innere Dichtlippe 23 sind auf der im geschlossenen Zustand der Tür 12 an der Karosserie 11 anliegenden Innenseite mit einer reibungsvermindernden Beflockung 33 versehen, die ein Anhaften der Dichtlippen 22, 23 an der Karosserie 11 verhindert.

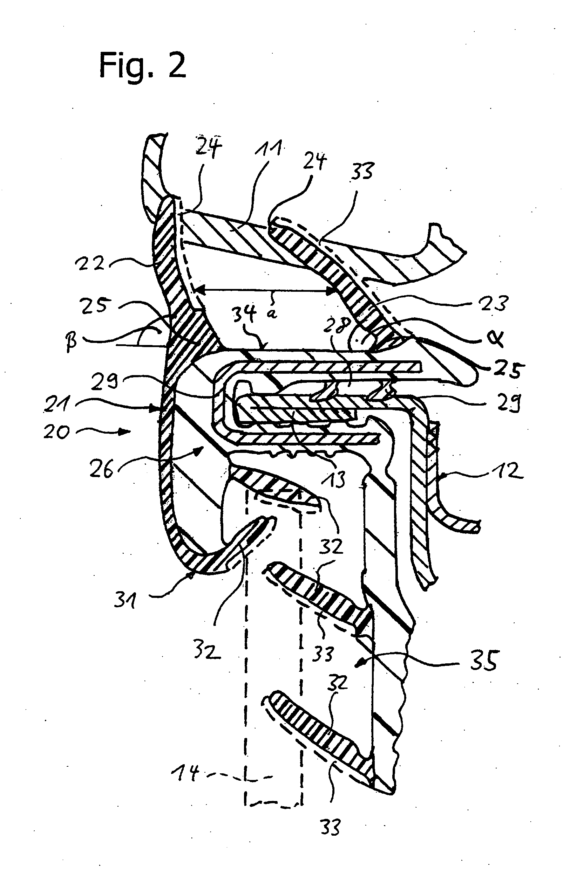

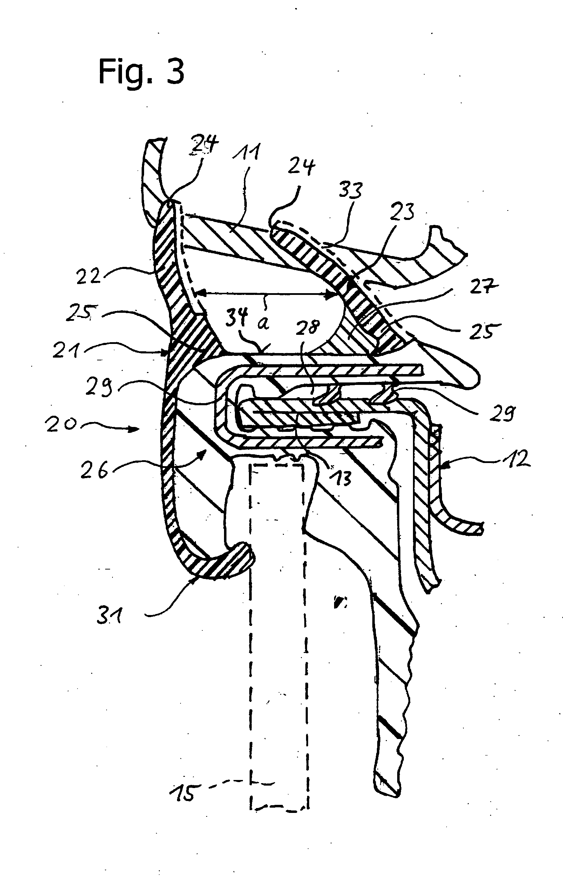

Wie die Fig. 2 und 3 zu erkennen geben, ist das Dichtungsprofil 20 ferner mit einem zweiten Dichtungsabschnitt 31 versehen, der zum Abdichten der Fensterscheiben 14, 15 dient. Der Dichtungsabschnitt 31 ist im Bereich der bewegbaren Fensterscheibe 14 als Fensterführung ausgestaltet und weist einen Kanal 35 auf, der den oberen Rand der Fensterscheibe 14 im geschlossenen Zustand aufnimmt. In dem Kanal 35 sind Dichtlippen 32 angeordnet, die im geschlossenen Zustand der Fensterscheibe 14 an dieser anliegen und auf der an der Fensterscheibe 14 anliegenden Seite mit einer reibungsvermindernden Beflockung 33 versehen sind. Wie Fig. 3 zu erkennen gibt, ist der Dichtungsabschnitt 31 im Bereich der feststehenden Fensterscheibe 15 als Scheibeneinfassung ausgestaltet, durch welche die Fensterscheibe 15 dichtend eingefasst wird.

Weiterhin geben die Fig. 2 und 3 zu erkennen, dass das Dichtungsprofil 20 zwischen dem ersten Dichtungsabschnitt 21 und dem zweiten Dichtungsabschnitt 31 einen Befestigungsabschnitt 26 aufweist, der dazu dient, das Dichtungsprofil 20 an einem Flansch 13 der Tür 12 zu befestigen. Der Befestigungsabschnitt 26 weist zu diesem Zweck eine kanalförmige Aussparung 28 auf, die auf den Flansch 13 aufsteckbar ist. Um einen zuverlässigen Kraftschluss zwischen dem Befestigungsabschnitt 26 und dem Flansch 13 zu gewährleisten, sind in der Aussparung 28 Haltelippen 29 angeordnet. Darüber hinaus ist der Befestigungsabschnitt 26 durch einen Verstärkungsträger 30 amiert, der im Querschnitt U-förmig ist. Der Verstärkungsträger 30 kann zum Beispiel aus einem metallenen Stanzband oder einem gebogenen Drahtwendelband bestehen.

Wie Fig. 1 zu erkennen gibt, ist das Dichtungsprofil 20 in der Längsrichtung gekrümmt. Die Krümmung K folgt der Kontur der Tür 12 beziehungsweise der Karosserie 11 und ist besonders stark im Übergang von der C-Säule des Kraftfahrzeugs 10 zum Wagenkörper. In diesem Bereich starker Krümmung K ist der Dichtungsabschnitt 21 mit einem Zusatzabschnitt 27 versehen, der an dem Fuß 25 der inneren Dichtlippe 23 angeordnet ist. Wie Fig. 3 zu erkennen gibt, ist der beispielsweise durch variable Extrusion oder durch Anspritzen an die Dichtlippe 23 erzeugte Zusatzabschnitt 27 im Querschnitt im wesentlichen keilförmig und stützt auf diese Weise die im Querschnitt im wesentlichen stiftförmige und gegenüber der Außenfläche 34 geneigte Dichtlippe 23 ab.

Das zuvor beschriebene Dichtungsprofil 20 zeichnet sich dadurch aus, dass eine unerwünschte Verformung der Dichtlippe 23 im Bereich der starken Krümmung K beim Biegen des Dichtungsprofils 20 vermieden wird. Dies ist vor allem auf den Zusatzabschnitt 27 zurückzuführen, der die Dichtlippe 23 lokal abstützt. Der Zusatzabschnitt 27 verhindert ein Einfallen des Dichtungsabschnitts 21 im Bereich der Krümmung K und ermöglicht auf diese Weise, das Dichtungsprofil 20 auch im Bereich der Krümmung K durch Extrusion zu fertigen. Im Unterschied zum Stand der Technik ist es somit nicht erforderlich, das Dichtungsprofil 20 im Bereich der Krümmung K mit einem spritzgegossenen Formteil zu versehen, das an den gekrümmten Verlauf des Dichtungsabschnitts 21 im Bereich der Krümmung K angepasst ist. Nicht zuletzt trägt das Dichtungsprofil 20 daher einer einfachen und kostengünstigen Fertigung Rechnung.

### Bezugszeichenliste

- 10: Kraftfahrzeug
- 11: Karosserie
- 12: Tür
- 13: Flansch
- 14: bewegbare Fensterscheibe
- 15: feststehende Fensterscheibe

- 20: Dichtungsprofil
- 21: erster Dichtungsabschnitt
- 22: äußere Dichtlippe
- 23: innere Dichtlippe
- 24: freies Ende
- 25: Fuß
- 26: Befestigungsabschnitt
- 27: Zusatzabschnitt
- 28: Aussparung
- 29: Haltelippe
- 30: Verstärkungsträger
- 31: zweiter Dichtungsabschnitt
- 32: Dichtlippe
- 33: Beflockung
- 34: Außenfläche
- 35: Kanal

- a: Abstand
- α: Winkel
- β: Winkel

- K: Krümmung

## Patentansprüche

1. Dichtungsprofil, insbesondere zum Abdichten einer Tür (12) gegenüber der Karosserie (11) eines Kraftfahrzeugs (10), mit
einem Dichtungsabschnitt (21, 31), der wenigstens eine Dichtlippe (22, 23, 32) aufweist und sich in einer Längsrichtung erstreckt, und
einem Befestigungsabschnitt (26), der an einem Bauteil (13) befestigbar ist,
wobei der Dichtungsabschnitt (21, 31) aus einem elastisch verformbaren Werkstoff gefertigt und in der Längsrichtung gekrümmt ist und
wobei die Dichtlippe (22, 23) ein freies Ende (24) und einen dem freien Ende (24) abgewandten Fuß (25) aufweist,
**gekennzeichnet durch** einen Zusatzabschnitt (27), der im Bereich einer vorgegebenen Krümmung (K) des Dichtungsabschnitts (21) an dem Fuß (25) der Dichtlippe (22, 23) angeordnet ist.

2. Dichtungsprofil nach Anspruch 1, **dadurch gekennzeichnet, dass** der - Dichtungsabschnitt (21, 31) und/oder der Befestigungsabschnitt (26) aus einem elastomeren Werkstoff extrudiert sind.

3. Dichtungsprofil nach Anspruch 2, **dadurch gekennzeichnet, dass** der elastomere Werkstoff ein thermoplastisches Elastomer oder Ethylen-Propylen-Dien-Kautschuk ist.

4. Dichtungsprofil nach Anspruch 2 oder 3, **dadurch gekennzeichnet, dass** der Zusatzabschnitt (27) durch variable Extrusion gefertigt ist.

5. Dichtungsprofil nach einem der Ansprüche 1 bis 3, **dadurch gekennzeichnet, dass** der Zusatzabschnitt (27) an den Fuß (25) der Dichtlippe (22, 23) geklebt oder angespritzt ist.

6. Dichtungsprofil nach einem der Ansprüche 1 bis 5, **dadurch gekennzeichnet, dass** der Dichtungsabschnitt (21) eine Außenfläche (34) aufweist, die sich in einer Querrichtung des Dichtungsabschnitts (21) erstreckt, wobei die Dichtlippe (23) in einem Winkel (α) zu der Außenfläche (34) angeordnet ist.

7. Dichtungsprofil nach Anspruch 6, **dadurch gekennzeichnet, dass** die Dichtlippe. (23) in einem spitzen Winkel (α) zu der Außenfläche (34) angeordnet ist.

8. Dichtungsprofil nach Anspruch 6 oder 7, **dadurch gekennzeichnet, dass** der Zusatzabschnitt (27) im Querschnitt annähernd keilförmig ist.

9. Dichtungsprofil nach einem der Ansprüche 1 bis 8, **dadurch gekennzeichnet, dass** die Dichtlippe (22, 23, 32) mit einer reibungsvermindernden Beschichtung oder Beflockung (33) versehen ist.

10. Dichtungsprofil nach einem der Ansprüche 1 bis 9, **dadurch gekennzeichnet, dass** der Dichtungsabschnitt (21) eine äußere Dichtlippe (22) und eine innere Dichtlippe (23) aufweist, die sich in Längsrichtung des Dichtungsabschnitts (21) erstrecken und in der Querrichtung des Dichtungsabschnitts (21) in einem Abstand (a) voneinander angeordnet sind.

11. Dichtungsprofil nach Anspruch 10, **dadurch gekennzeichnet, dass** der Zusatzabschnitt (27) ausschließlich an dem Fuß (25) der innern Dichtlippe (23) angeordnet ist.

12. Dichtungsprofil nach einem der Ansprüche 1 bis 11, **gekennzeichnet durch** einen ersten Dichtungsabschnitt (21), der zum Abdichten einer Tür (12) gegenüber der Karosserie (11) eines Kraftfahrzeugs (10) dient, und einen zweiten Dichtungsabschnitt (31), der zum Abdichten wenigstens einer Fensterscheibe (14, 15) der Tür (12) dient.

13. Dichtungsprofil nach einem der Ansprüche 1 bis 12, **dadurch gekennzeichnet, dass** der Befestigungsabschnitt (26) mit einer kanalförmigen Aussparung (28) versehen ist, die auf das Bauteil (13) aufsteckbar ist.

14. Dichtungsprofil nach Anspruch 13, **gekennzeichnet durch** Haltelippen (29), die in der Aussparung (28) angeordnet sind.

15. Dichtungsprofil nach einem der Ansprüche 1 bis 14, **gekennzeichnet durch** einen Verstärkungsträger (30), **durch** den der Befestigungsabschnitt (26) armiert ist.

16. Dichtungsprofil nach Anspruch 15, **dadurch gekennzeichnet, dass** der Verstärkungsträger (30) im Querschnitt annähernd U-förmig ausgestaltet, aus einem metallischen Werkstoff gefertigt und mit einer Vielzahl an Öffnungen versehen ist.

## Claims

1. Sealing profile, in particular for sealing between a door (12) and the bodywork (11) of a motor vehicle (10), comprising
a sealing section (21, 31) having at least one sealing lip (22, 23, 32) and extending in a longitudinal direction and,
a fastening section (26) which can be secured to a constructional part (13),
wherein the sealing section (21, 31) is manufactured of a deformable elastic material and is curved in its longitudinal direction and
wherein the sealing lip (22, 23) has a free end (24) and a foot (25) at the opposite end to the free end (24)
**characterised by** an additional portion (27) which is arranged in the area of the prescribed curve (K) of the sealing section (21) at the foot (25) of the sealing lip (22, 23).

2. Sealing profile according to Claim 1 **characterised in that** the sealing section (21, 31) and/or the fastening section (26) are extruded from an elastomer material.

3. Sealing profile according to Claim 2 **characterised in that** the elastomer material is a thermoplastic elastomer or ethylene-propylenediene rubber.

4. Sealing profile according to claims 2 or 3 **characterised in that** the additional portion (27) is manufactured by means of variable extrusion.

5. Sealing profile according to one of the claims 1 to 3 **characterised in that** the additional portion (27) is glued or injection moulded to the foot (25) of the sealing lip (22, 23).

6. Sealing profile according to one of the claims 1 to 5 **characterised in that** the sealing section (21) has an exterior surface (34) extending transversely to the sealing section (21) wherein the sealing lip (23) is arranged at an angle (α) to the exterior surface (34).

7. Sealing profile according Claim 6 **characterised in that** the sealing lip (23) is arranged at an acute angle (α) to the exterior surface (34).

8. Sealing profile according to claim 6 or 7 **characterised in that** the additional portion (27) is approximately wedge-shaped in cross-section.

9. Sealing profile according to one of the claims 1 to 8 **characterised in that** the sealing lip (22, 23) is provided with a friction-reducing coating or flocking (33).

10. Sealing profile according to one of the claims 1 to 9 **characterised in that** the sealing section (21) has outer sealing lip (22) and an inner sealing lip (23) extending longitudinally along the sealing section (21) and which are arranged at a distance (a) from each other in the transverse direction of the sealing section (21).

11. Sealing profile according to Claim 10 **characterised in that** the additional portion (27) is arranged exclusively at the foot (25) of the inner sealing lip (23).

12. Sealing profile according to one of the claims 1 to 11 **characterised by** a first sealing section (21) for sealing between a door (12) and the bodywork (11) of a motor vehicle (10) and a second sealing section (31) for sealing at least one window pane (14, 15) of the door (12).

13. Sealing profile according to one of the claims 1 to 12 **characterised in that** the fastening section (26) is provided with a channel-shaped recess (28) which can be fitted over the constructional part (13).

14. Sealing profile according to Claim 13 **characterised by** retaining lips (29) arranged in the recess (28).

15. Sealing profile according to one of the claims 1 to 14 **characterised by** a reinforcement strip (30) by means of which the fastening section (26) is strengthened.

16. Sealing profile according to Claim 15 **characterised in that** the reinforcement strip (30) is approximately U-shaped in cross-section, is manufactured of a metal material and is provided with a number of openings.

## Revendications

1. Profilé d'étanchéité, en particulier pour étancher une porte (12) par rapport à la carrosserie (11) d'un véhicule automobile (10), comprenant
un tronçon d'étanchéité (21, 31) qui comprend au moins une lèvre d'étanchéité (22, 23, 32) et qui s'étend dans une direction longitudinale, et
un tronçon de fixation (26), susceptible d'être fixé sur un composant structurel (13),
dans lequel le tronçon d'étanchéité (21, 31) est réalisé en un matériau élastiquement déformable et est courbé dans la direction longitudinale, et
la lèvre d'étanchéité (22, 23) présente une extrémité libre (24) et un pied (25) détourné de l'extrémité libre (24),
**caractérisé par** un tronçon supplémentaire (27) qui est agencé dans une région d'une courbure prédéterminée (K) du tronçon d'étanchéité (21) sur le pied (25) de la lèvre d'étanchéité (22, 23).

2. Profilé d'étanchéité selon la revendication 1, **caractérisé en ce que** le tronçon d'étanchéité (21, 31) et/ou le tronçon de fixation (26) sont extrudés à partir d'un matériau élastomère.

3. Profilé d'étanchéité selon la revendication 2, **caractérisé en ce que** le matériau élastomère est un élastomère thermoplastique ou un caoutchouc éthylène-propylène-diène.

4. Profilé d'étanchéité selon la revendication 2 ou 3, **caractérisé en ce que** le tronçon supplémentaire (27) est réalisé par extrusion variable.

5. Profilé d'étanchéité selon l'une des revendications 1 à 3, **caractérisé en ce que** le tronçon supplémentaire (27) est collé ou enrobé par injection sur le pied (25) de la lèvre d'étanchéité (22, 23).

6. Profilé d'étanchéité selon l'une des revendications 1 à 5, **caractérisé en ce que** le tronçon d'étanchéité (21) comprend une surface extérieure (34) qui s'étend dans une direction transversale du tronçon d'étanchéité (21),
dans lequel la lèvre d'étanchéité (23) est agencée sous un angle (α) par rapport à la surface extérieure (34).

7. Profilé d'étanchéité selon la revendication 6, **caractérisé en ce que** la lèvre d'étanchéité (23) est agencée sous un angle aigu (α) par rapport à la surface extérieure (34).

8. Profilé d'étanchéité selon la revendication 6 ou 7, **caractérisé en ce que** le tronçon supplémentaire (27) présente en section transversale approximativement une forme en coin.

9. Profilé d'étanchéité selon l'une des revendications 1 à 8, **caractérisé en ce que** la lèvre d'étanchéité (22, 23, 32) est pourvue d'un revêtement ou d'un flocage (33) réduisant la friction.

10. Profilé d'étanchéité selon l'une des revendications 1 à 9, **caractérisé en ce que** le tronçon d'étanchéité (21) comprend une lèvre d'étanchéité extérieure (22) et une lèvre d'étanchéité intérieure (23), qui s'étendent en direction longitudinale du tronçon d'étanchéité (21) et qui sont agencées à distance (a) l'une de l'autre en direction transversale du tronçon d'étanchéité (21).

11. Profilé d'étanchéité selon la revendication 10, **caractérisé en ce que** le tronçon supplémentaire (27) est agencé exclusivement sur le pied (25) de la lèvre d'étanchéité intérieure (23).

12. Profilé d'étanchéité selon l'une des revendications 1 à 11, **caractérisé par** un premier tronçon d'étanchéité (21), qui sert à étancher une porte (12) par rapport à la carrosserie (11) d'un véhicule automobile (10), et par un second tronçon d'étanchéité (31), qui sert à étancher au moins une vitre de fenêtre (14, 15) de la porte (12).

13. Profilé d'étanchéité selon l'une des revendications 1 à 12, **caractérisé en ce que** le tronçon de fixation (26) est pourvu d'une échancrure en forme de canal (28), laquelle peut être emboîtée sur le composant structurel (13).

14. Profilé d'étanchéité selon la revendication 13, **caractérisé par** des lèvres de maintien (29), qui sont agencées dans l'échancrure (28).

15. Profilé d'étanchéité selon l'une des revendications 1 à 14, **caractérisé par** un support de renforcement (30), au moyen duquel le tronçon de fixation (26) est armé.

16. Profilé d'étanchéité selon la revendication 15, **caractérisé en ce que** le support de renforcement (30) est conçu avec une section transversale approximativement en forme de U, est réalisé en un matériau métallique, et est pourvu d'une pluralité d'ouvertures.
